(19) Europäisches Patentamt
European Patent Office
Office européen des brevets

(11) **EP 2 729 697 B1**

(12) **EUROPEAN PATENT SPECIFICATION**

(45) Date of publication and mention
of the grant of the patent:
**21.11.2018 Bulletin 2018/47**

(51) Int Cl.:
*F03D 1/06* (2006.01)          *D01F 9/22* (2006.01)
*B29C 70/88* (2006.01)          *D01F 9/14* (2006.01)
*B29L 31/08* (2006.01)          *F03D 80/30* (2016.01)

(21) Application number: **12733118.9**

(22) Date of filing: **06.07.2012**

(86) International application number:
**PCT/EP2012/063206**

(87) International publication number:
**WO 2013/004805 (10.01.2013 Gazette 2013/02)**

(54) **A WIND TURBINE BLADE**

WINDTURBINENSCHAUFEL

PALE D'ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.07.2011 EP 11172805**

(43) Date of publication of application:
**14.05.2014 Bulletin 2014/20**

(73) Proprietor: **LM WP Patent Holding A/S
6000 Kolding (DK)**

(72) Inventors:
• **ZHANG, Wenting
DK-6000 Kolding (DK)**

• **OLESEN, Morten
DK-6640 Lunderskov (DK)**
• **JACOBSEN, Torben Krogsdal
DK-6640 Lunderskov (DK)**

(74) Representative: **Kitchen, Steven Richard et al
LM Wind Power A/S
Jupitervej 6
6000 Kolding (DK)**

(56) References cited:
**EP-A1- 0 278 139          US-A- 4 816 242
US-A1- 2001 024 722**

EP 2 729 697 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a wind turbine blade including a structure made of a fibre reinforced polymer material including a polymer matrix and fibre reinforcement material embedded in the polymer matrix, wherein the fibre reinforcement material includes carbon fibres.

Background Art

The damages to the wind turbine blades caused by strokes of lightning can be rather comprehensive. Extremely strong currents of the magnitude 10 to 200 kA are involved within a very short period. The power involved is low, but the effect is very strong and can cause burstings because the air confined in the blade expands explosively. It is known to insert strong interlaced cables in the blade so as to divert the lightning. Then a particular receptor is provided at the tip of the blade, said receptor serving to capture the lightning as well as to prevent this location from being too strongly heated. Furthermore it is known to reinforce each blade by means of a carbon fibre coating. A copper web can optionally be applied onto the carbon fibre coating so as to protect said coating.

WO 00/14405 discloses a wind turbine blade with a lightning conductor, where said lightning conductor is formed by one or more oblong strips of carbon fibre-reinforced plastics preferably forming part of the wind turbine blade. In this manner the oblong strips of carbon fibre-reinforced plastics both reinforce the blade and divert the lightning. However, in order to prevent carbon fibre-reinforced plastics from being too strongly heated in the case of lightning, it may be necessary to provide a carbon stick in the interior of each blade, and to connect the oblong strips to said inner carbon stick. Furthermore, a conventional lightning conductor cable may be provided on the inner carbon conductor or on an inner reinforcing member.

EP 1 664 528 B1 describes a method of lightning-proofing a wind turbine blade on a wind-energy plant. The blade comprises a blade shell configured essentially as a fibre-reinforced laminate, which laminate comprises electrically conductive fibres, wherein the blade comprises at least one lightning arrester configured for conducting lightning current, including preferably to ground. The method comprises that the electrically conductive fibres are connected to each other, and that at least one metallic receptor is arranged for capturing lightning current at or in proximity of the external face of the blade; and that the receptor and the fibres are connected to the lightning arrester for equalising the difference in potential between the lightning arrester and the electrically conductive fibres. When the electrically conductive fibres are connected to each other, the fibres will cooperate on the conduction of a possible lightning current to prevent the current from running in individual fibres. Simultaneously the metallic receptor will serve as the primary lightning capturing device and reduce the risk of lightning striking the laminate. The receptor being connected to the lightning arrester, the current will predominately be conducted to ground, while the risk of transfer to the laminate is minimised in that a possible difference in potential between fibres and lightning arrester has been equalised.

WO 03/078833 discloses a wind turbine blade of fibre-reinforced polymer. The blade is divided into an inner end portion including the blade root and made substantially from fibre glass-reinforced polymer, and an outer end portion including the blade tip and made substantially from carbon fibre-reinforced polymer. The weight is thus reduced in the outermost part, whereby the dead load moment is minimised. However, for lightning reasons the outermost portion of the blade tip may be made entirely out of fibre glass so as to ensure that strokes of lightning hit a purpose-built lightning receptor and not the electrically conducting carbon fibre material.

WO 03/078832 discloses a wind turbine blade and a transitional shell blank for the manufacture of the shell of a wind turbine blade, the blade or the transitional shell blank being made of fibre-reinforced polymer including a first type of fibres of a first stiffness and a first elongation at breakage, and a second type of fibres of a different stiffness and a different elongation at breakage. The two types of fibres are distributed in the polymer matrix. When seen in a sectional view perpendicular to longitudinal direction of the blade or the transitional shell blank, the quantitative ratio of the two types of fibres varies continuously in the longitudinal direction of the blade or of the transition shell blank. The first fibre type may be glass fibres and the second type may be carbon fibres. However, as described above, for lightning reasons the outermost portion of the blade tip may be made entirely out of fibre glass so as to ensure that strokes of lightning hit a purpose-built lightning receptor and not the electrically conducting carbon fibre material.

US 2001/024722 discloses carbon fibres consisting of a plurality of filaments that may be used in prepregs and composite material. The carbon fibres can be produced by stabilising and subsequently carbonising precursor fibres. It is described that the prepreg and composite material may be used as primary structural material of for instance wind mills and turbine blades.

US patent no. 4,816,242 discloses a method of forming partially carbonised fibrous material with an enhanced stable resistivity and increased conductivity for use in an electrostatic charge dissipater or as shielding for electromagnetic radiation. Such fibrous material is unsuitable for reinforcement material in wind turbine blades, since lightning strikes would have a larger tendency to hit the blade instead of the receptor, thereby making it difficult to control the lightning current path to the ground.

It is thus seen that known wind turbine blades incorporating carbon fibres in order to improve properties such as weight and strength are generally complicated to manufacture due to the necessary precautions in order to prevent damages caused by lightning strokes.

On the other hand, with an increasing blade length to even more than 100 metres, it may be necessary to reduce the relative weight of the blades. Furthermore, stiffer blades with better fatigue performance may be required.

Disclosure of the Invention

The object of the present invention is to provide a wind turbine blade having improved properties with regard to weight and strength and at the same time being simpler to manufacture.

In view of this object, the carbon fibres have been produced by carbonisation of a precursor to a carbonisation degree of 60% to 80%.

Thereby, generally a vastly increased resistivity of the fibre reinforced polymer material may be obtained, whereby the need for complicated lightning protection measures may be reduced, as the carbon fibres themselves, substantially, do not conduct the current and therefore will not get damaged. At the same time, a stronger blade may be obtained, as the stiffness of carbon fibres may be up to at least three times higher compared to the stiffness of glass fibres. Furthermore, a better fatigue performance may be obtained by means of carbon fibres than by means of glass fibres. Furthermore, less material may be required per blade. Lower blade mass may lead to the reduction of root bending moment, and blades may even be easier to handle in production, shipping and mounting.

Accordingly, it is seen that the carbon fibres constitute reinforcement fibres in the wind turbine blade, preferably so as to add stiffness to the blade. Accordingly, the carbon fibres may comprise layers with unidirectionally arranged carbon fibres, advantageously extending substantially in the longitudinal or spanwise direction of the blade. The carbon fibres may for instance be carbon fibre tows comprising a plurality of filaments. The tows may comprise 1,000-15,000 filaments, e.g. around 6,000 or 12,000 filaments.

In an embodiment, the carbon fibres have been produced by carbonisation of a precursor to a carbonisation degree of less than 78%, preferably less than 76%, more preferred less than 74%, even more preferred less than 72%, even more preferred less than 70%, even more preferred less than 68%, even more preferred less than 66%, and most preferred less than 64%.

In an embodiment, the wind turbine blade includes a longitudinally extending load carrying structure including at least a part of said carbon fibres and preferably all of said carbon fibres.

In an embodiment, the longitudinally extending load carrying structure is a main laminate forming part of a shell structure.

In an embodiment, the longitudinally extending load carrying structure is an inner beam or spar box connecting outer shell structures.

In an embodiment, the precursor is polyacrylonitrile (PAN).

In an embodiment, the fibre reinforcement material is constituted by carbon fibres.

In an embodiment, any rectangular sample corresponding in composition and thickness to a part of the shell structure has a sheet resistance of more than $10^9$ ohms-per-square and preferably more than $10^{10}$ ohms-per-square.

In an embodiment, any rectangular sample corresponding in composition and thickness to a part of the longitudinally extending load carrying structure has a sheet resistance of more than $10^9$ ohms-per-square and preferably more than $10^{10}$ ohms-per-square.

Brief Description of the Drawings

The invention will now be explained in more detail below by means of examples of embodiments with reference to the very schematic drawing, in which

Fig. 1 is a top view of a wind turbine blade;

Fig. 2 is a cross-section along the line II-II of Fig. 1; and

Fig. 3 is a rectangular sample corresponding in composition and thickness to a part of the shell structure of the wind turbine blade in Figs. 1 and 2.

Detailed Description of the Invention

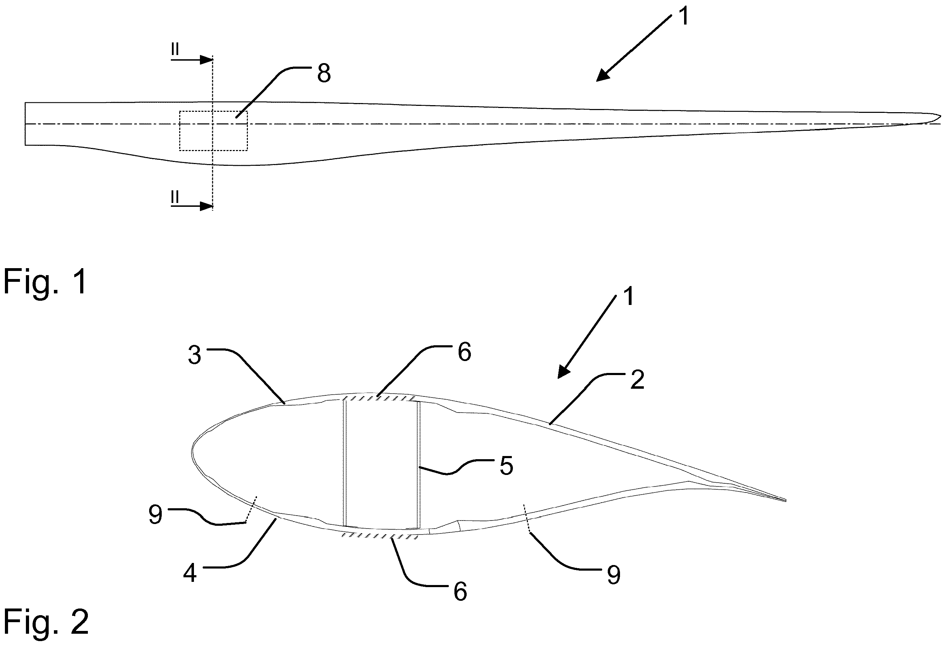

Fig. 1 shows a wind turbine blade 1 according to the invention. The wind turbine blade 1 includes a shell structure 2 made of a fibre reinforced polymer material including a polymer matrix and fibre reinforcement material embedded in the polymer matrix. As it is seen in the figure, the shell structure 2 is composed of two oblong shell parts, an upper shell part 3 and a lower shell part 4. The shell parts 3, 4 are bonded together at their edges. Furthermore, the shell parts are connected internally by means of longitudinally extending reinforcement elements 5, such as beams or webs, which are aligned within the shell parts of the wind turbine blade 1 and bonded to the shell parts 3, 4. In the shown embodiment, these reinforcement elements 5 do not carry a substantial part of the load on the blade; they rather serve to connect the shell parts of the wind turbine blade 1 and to alleviate for shear stresses.

The first and second oblong shell parts 3, 4 comprise a fibre-reinforced polymer material produced by means of an infusion process, such as vacuum infusion or VARTM (Vacuum Assisted Resin Transfer Moulding). During the manufacturing process, liquid polymer, also called resin, is filled into a mould cavity, in which fibre material priorly has been inserted, and where a vacuum is generated in the mould cavity hereby drawing in the polymer. The polymer can be thermoset plastic or thermoplastics. Typically, uniformly distributed fibres are layered in a first rigid mould part, the fibres being rovings, i.e. bundles of fibre bands, bands of rovings or mats, which are either felt mats made of individual fibres or woven mats made of fibre rovings. A second mould part, which is often made of a resilient vacuum bag, is subsequently placed on top of the fibre material and sealed against the first mould part in order to generate a mould cavity. By generating a vacuum, typically 80 to 95% of the total vacuum, in the mould cavity between the first mould part and the vacuum bag, the liquid polymer can be drawn in and fill the mould cavity with the fibre material contained herein. So-called distribution layers or distribution tubes, also called inlet channels, are used between the vacuum bag and the fibre material in order to obtain as sound and efficient a distribution of polymer as possible. In most cases the polymer applied is polyester or epoxy, and the fibre reinforcement is according to the present invention based at least partially on carbon fibres, but may also include glass fibres.

According to the present invention, the carbon fibres have been produced by carbonisation of a precursor to a carbonisation degree of 60% to 80%.

The carbon fibres may have been produced by carbonisation of a precursor to a carbonisation degree of less than 78%, preferably less than 76%, more preferred less than 74%, even more preferred less than 72%, even more preferred less than 70%, even more preferred less than 68%, even more preferred less than 66%, and most preferred less than 64%.

The precursor may be polyacrylonitrile. Furthermore, the fibre reinforcement material throughout the wind turbine blade may be entirely constituted by carbon fibres.

The conventional carbon fibre production process may be as follows:

- PAN production process: polymerisation, washing, surface treatment, drying, stretching and packing
- Carbonisation process: stretching, oxidation, carbonisation, surface treatment and winding

The carbonisation process leaves a fibre composed of long, tightly interlocked chains of carbon atoms. The carbonisation temperature influences the grade of carbon fibre and modulus of elasticity which, for instance, may be from 200 to more than 600 GPa. According to the invention, the carbon fibres employed may have been produced in a carbonisation process that has been modified to reduce the carbonisation degree of the carbon fibres. For instance, the carbonisation temperature may be reduced to below 1000 °C. The stretching process may be speeded up. A coating or surface treatment may be provided on the carbon fibre surface.

Furthermore, in the embodiment shown, the wind turbine blade includes a longitudinally extending load carrying structure in the form of a main laminate 6 forming part of the shell structure. The longitudinally extending load carrying structure may include at least a part of said carbon fibres. Such a load carrying structure in the form of a main laminate or the like is typically formed as a fibre insertion which comprises a plurality of fibre reinforcement layers, e.g. between 20 and 50 layers. On each side of the load carrying structure, the blade typically comprises a sandwich structure with a core material, such as balsa wood or foamed polymer, and with an inner and outer skin made of fibre reinforced polymer.

According to another not shown embodiment, the wind turbine blade includes a longitudinally extending load carrying structure in the form of an inner beam or spar box connecting outer shell structures. Said inner beam or spar box may be a separate part bonded to the outer shell structures and may be adapted to carry a substantial part of the load on the blade. According to this embodiment, a main laminate may not be necessary.

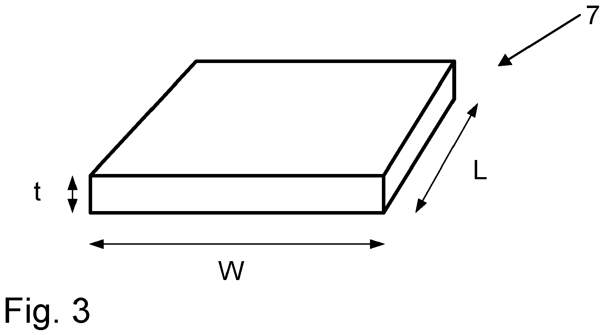

Sheet resistance is normally applicable to two-dimensional systems where a thin film is considered to be a two-dimensional entity and corresponds to resistivity as employed in three-dimensional systems. When the term sheet resistance is employed, the current flows along the plane of the sheet and not perpendicular to it. In this description, however, sheet resistance is employed to describe the resistivity of a rectangular sample 7 as shown in Fig. 3 corresponding in composition and thickness to a part of the shell structure of a wind turbine blade. The rectangular sample 7 may correspond to a rectangular piece 8 cut out of the shell structure 2 as indicated in Fig. 1. In Fig. 2, broken lines 9 indicate the longitudinal cutting lines along which the rectangular piece 8 may be cut out of the shell structure 2.

In a regular three-dimensional conductor, the resistance can be written as

$$R = \rho \frac{L}{A} = \rho \frac{L}{Wt}$$

where p is the resistivity, A is the cross-sectional area and L is the length. The cross-sectional area can be split into the width W and the sheet thickness t.

By grouping the resistivity with the thickness, the resistance can then be written as:

$$R = \frac{\rho}{t} \frac{L}{W} = R_s \frac{L}{W}$$

$R_s$ is then considered the sheet resistance.

As the resistance is multiplied by a dimensionless quantity to get the sheet resistance, the units of sheet resistance are ohms or commonly "ohms per square".

According to an embodiment of the present invention, any rectangular sample corresponding in composition and thickness to a part of the shell structure of the wind turbine blade has a sheet resistance of more than $10^9$ ohms-per-square and preferably more than $10^{10}$ ohms-per-square. This means that if a square-formed sample is prepared that corresponds in composition and thickness to a part of the shell structure of the wind turbine blade, this square-formed sample will have a resistance measured between two opposed edges of more than $10^9$ ohms and preferably more than $10^{10}$ ohms. Of course, according to this embodiment, the same will be true for any square-formed piece cut out of the shell structure, through the entire thickness of the shell structure, of the wind turbine blade. If the sample is rectangular with for instance a length L of 2 metres and a width W of 1 metre, the resistance measured between the two opposed end edges (smaller edges) will, according to this embodiment, be of more than $2 \times 10^9$ ohms and preferably more than $2 \times 10^{10}$ ohms.

In an embodiment, any rectangular sample corresponding in composition and thickness to a part of the longitudinally extending load carrying structure has a sheet resistance of more than $10^9$ ohms-per-square and preferably more than $10^{10}$ ohms-per-square.

According to the invention, by the incorporation of carbon fibres as reinforcement, an improved wind turbine blade in terms of weight and strength may be obtained without the need for complicated and expensive precautions, such as difficult internal cabling, in order to prevent damages caused by lightning strokes.

## Claims

1. A wind turbine blade (1) including a structure made of a fibre reinforced polymer material including a polymer matrix and fibre reinforcement material embedded in the polymer matrix, wherein the fibre reinforcement material includes carbon fibres, **characterised in that** the carbon fibres have been produced by carbonisation of a precursor to a carbonisation degree of 60% to 80%.

2. A wind turbine blade according to claim 1, wherein the carbon fibres have been produced by carbonisation of a precursor to a carbonisation degree of less than 78%, preferably less than 76%, more preferred less than 74%, even more preferred less than 72%, even more preferred less than 70%, even more preferred less than 68%, even more preferred less than 66%, and most preferred less than 64%.

3. A wind turbine blade according to claim 1 or 2, wherein the wind turbine blade includes a longitudinally extending load carrying structure including at least a part of said carbon fibres and preferably all of said carbon fibres.

4. A wind turbine blade according to claim 3, wherein the longitudinally extending load carrying structure is a main laminate (6) forming part of a shell structure (2).

5. A wind turbine blade according to claim 3, wherein the longitudinally extending load carrying structure is an inner beam or spar box connecting outer shell structures.

6. A wind turbine blade according to any one of the preceding claims, wherein the precursor is polyacrylonitrile.

7. A wind turbine blade according to any one of the preceding claims, wherein the fibre reinforcement material is constituted by carbon fibres.

8. A wind turbine blade according to any one of the preceding claims, wherein any rectangular sample (7) corresponding in composition and thickness to a part of the shell structure (2) has a sheet resistance of more than $10^9$ ohms-per-square and preferably more than $10^{10}$ ohms-per-square.

9. A wind turbine blade according to any one of the claims 3 to 7, wherein any rectangular sample (7) corresponding in composition and thickness to a part of the longitudinally extending load carrying structure has a sheet resistance of more than $10^9$ ohms-per-square and preferably more than $10^{10}$ ohms-per-square.

10. A wind turbine blade according to any of the preceding claims, wherein the reinforcement material comprises layers of carbon fibres that are arranged unidirectionally.

11. A wind turbine blade according to claim 10, wherein the unidirectionally arranged carbon fibres are arranged substantially in a spanwise direction of the blade.

12. A wind turbine blade according to any of the preceding claims, wherein at least a part of the carbon fibres are arranged as carbon fibre tows.

## Patentansprüche

1. Windkraftanlagenflügel (1), umfassend eine Konstruktion, die aus einem faserverstärkten Polymermaterial mit einer Polymermatrix und in der Polymermatrix eingebettetem Faserverstärkungsmaterial hergestellt ist, wobei das Faserverstärkungsmaterial Kohlenstofffasern umfasst, **dadurch gekennzeichnet, dass** die Kohlenstofffasern durch Karbonsierung eines Vorläufers bis zu einem Karbonisierungsgrad von 60 % bis 80 % erzeugt wurden.

**2.** Windkraftanlagenflügel nach Anspruch 1, wobei die Kohlenstofffasern durch Karbonisierung eines Vorläufers bis zu einem Karbonisierungsgrad von weniger als 78 %, vorzugsweise weniger als 76 %, besser weniger als 74 %, noch besser weniger als 72 %, noch besser weniger als 70 %, noch besser weniger als 68 %, noch besser weniger als 66 % und am besten weniger als 64 % erzeugt wurden.

**3.** Windkraftanlagenflügel nach Anspruch 1 oder 2, wobei der Windkraftanlagenflügel eine sich in Längsrichtung erstreckende lasttragende Konstruktion umfasst, die mindestens einen Teil der Kohlenstofffasern und vorzugsweise alle der Kohlenstofffasern umfasst.

**4.** Windkraftanlage nach Anspruch 3, wobei es sich bei der sich in Längsrichtung erstreckenden lasttragenden Konstruktion um eine Hauptlaminat (6) handelt, das einen Teil einer Schalenkonstruktion (2) bildet.

**5.** Windkraftanlagenflügel nach Anspruch 3, wobei es sich bei der sich in Längsrichtung erstreckenden lasttragenden Konstruktion um einen inneren Träger oder Kastenträger handelt, der äußere Schalenkonstruktionen verbindet.

**6.** Windkraftanlagenflügel nach einem der vorangehenden Ansprüche, wobei es sich bei dem Vorläufer um Polyacrylnitril handelt.

**7.** Windkraftanlagenflügel nach einem der vorangehenden Ansprüche, wobei das Faserverstärkungsmaterial von Kohlenstofffasern gebildet wird.

**8.** Windkraftanlagenflügel nach einem der vorangehenden Ansprüche, wobei eine beliebige rechteckige Probe (7), die in Zusammensetzung und Dicke einem Teil der Schalenkonstruktion (2) entspricht, einen Flächenwiderstand von mehr als $10^9$ Ohm pro Quadrat und vorzugsweise mehr als $10^{10}$ Ohm pro Quadrat aufweist.

**9.** Windkraftanlagenflügel nach einem der Ansprüche 3 bis 7, wobei eine beliebige rechteckige Probe (7), die in Zusammensetzung und Dicke einem Teil der sich in Längsrichtung erstreckenden lasttragenden Konstruktion entspricht, einen Flächenwiderstand von mehr als $10^9$ Ohm pro Quadrat und vorzugsweise mehr als $10^{10}$ Ohm pro Quadrat aufweist.

**10.** Windkraftanlagenflügel nach einem der vorangehenden Ansprüche, wobei das Verstärkungsmaterial Lagen aus Kohlenstofffasern, die unidirektional angeordnet sind, umfasst.

**11.** Windkraftanlagenflügel nach Anspruch 10, wobei die unidirektional angeordneten Kohlenstofffasern im Wesentlichen in einer Spannweiterichtung des Flügels angeordnet sind.

**12.** Windkraftanlagenflügel nach einem der vorangehenden Ansprüche, wobei mindestens ein Teil der Kohlenstofffasern als Kohlenstoff-Spinnkabel angeordnet sind.

## Revendications

**1.** Pale d'éolienne (1) comprenant une structure réalisée à partir d'un matériau polymère renforcé par des fibres comprenant une matrice de polymère et un matériau de renfort de fibres noyé dans la matrice de polymère, dans laquelle le matériau de renfort de fibres comprend des fibres de carbone, **caractérisée en ce que** les fibres de carbone ont été produites par la carbonisation d'un précurseur selon un degré de carbonisation de 60 % à 80 %.

**2.** Pale d'éolienne selon la revendication 1, dans laquelle les fibres de carbone ont été produites par la carbonisation d'un précurseur selon un degré de carbonisation de moins de 78 %, de préférence de moins de 76 %, plus de préférence de moins de 74 %, encore plus de préférence de moins de 72 %, encore plus de préférence de moins de 70 %, encore plus de préférence de moins de 68 %, encore plus de préférence de moins de 66 % et le plus de préférence de moins de 64 %.

**3.** Pale d'éolienne selon la revendication 1 ou la revendication 2, dans laquelle la pale d'éolienne comprend une structure porteuse s'étendant dans le sens longitudinal comprenant au moins une partie desdites fibres de carbone et de préférence toutes lesdites fibres de carbone.

**4.** Pale d'éolienne selon la revendication 3, dans laquelle la structure porteuse s'étendant dans le sens longitudinal est un stratifié principal (6) faisant partie d'une structure formant coque (2).

**5.** Pale d'éolienne selon la revendication 3, dans laquelle la structure porteuse s'étendant dans le sens longitudinal est une traverse intérieure ou un caisson de longeron raccordant des structures extérieures de coque.

**6.** Pale d'éolienne selon l'une quelconque des revendications précédentes, dans laquelle le précurseur est du polyacrylonitrile.

**7.** Pale d'éolienne selon l'une quelconque des revendications précédentes, dans laquelle le matériau de renfort de fibres est constitué de fibres de carbone.

**8.** Pale d'éolienne selon l'une quelconque des revendications précédentes, dans laquelle tout échantillon rectangulaire (7) correspondant en composition et en épaisseur à une partie de la structure formant coque (2) a une résistance de couche de plus de $10^9$ ohms par carré et de préférence plus de $10^{10}$ ohms par carré.

**9.** Pale d'éolienne selon l'une quelconque des revendications 3 à 7, dans laquelle tout échantillon rectangulaire (7) correspondant en composition et en épaisseur à une partie de la structure porteuse s'étendant dans le sens longitudinal a une résistance de couche de plus de $10^9$ ohms par carré et de préférence plus de $10^{10}$ ohms par carré.

**10.** Pale d'éolienne selon l'une quelconque des revendications précédentes, dans laquelle le matériau renforcé comporte des couches de fibres de carbone qui sont agencées de manière unidirectionnelle.

**11.** Pale d'éolienne selon la revendication 10, dans laquelle les fibres de carbone agencées de manière unidirectionnelle sont agencées sensiblement dans une direction allant dans le sens de l'envergure de la pale.

**12.** Pale d'éolienne selon l'une quelconque des revendications précédentes, dans laquelle au moins une partie des fibres de carbone est agencée sous la forme de câbles de fibres de carbone.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0014405 A
- EP 1664528 B1
- WO 03078833 A
- WO 03078832 A
- US 2001024722 A
- US 4816242 A